# EUROPÄISCHE PATENTANMELDUNG

(11) **EP 1 398 417 A1**
(43) Veröffentlichungstag der Anmeldung: **17.03.2004**
(21) Anmeldenummer: 02405794.5
(22) Anmeldetag: 12.09.2002
(51) Int. Cl.: E01F 7/04, E02D 17/20

(54) **Netzelement**

(71) Anmelder: AVT Anker + Vorspanntechnik AG, CH-1712 Tafers (CH)
(72) Erfinder: Von Allmen, Hans Peter, 1712 Tafers (CH)
(74) Vertreter: Störzbach, Michael Andreas

(57) **Zusammenfassung**

Ein Netzelement (10) zum Abbremsen bewegter Massen (28) oder zur Sicherung gegen Materialverschiebungen umfasst ein Netz (20), das mindestens zwei Lagen (21, 22, 23) aufweist zur Erhöhung der Bruchkraft des Netzelementes.

## Beschreibung

Die Erfindung bezieht sich auf Netzelemente gemäss Oberbegriff des Anspruchs 1.

Der kinetischen Energie von bewegten Massen, wie z.B. Steinen, Geröll, Baumstämmen, Eisklötzen etc., wird zu deren Abbremsung hauptsächlich die Verformungsarbeit von Netzen und von Bremsen in den Seilen der Verbauungen entgegengesetzt. Die Verformungsarbeit ergibt sich aus den Brems- bzw. Verformungswegen und den bei deren Zurücklegung aktivierten Kräften.

Bisher werden für dynamische Zwecke mehrheitlich Maschennetze aus Drahtseilen oder Ringnetze aus Drahtseilen, Stahldrähten oder Spannstahldrahtlitzen hoher Festigkeit (> 1000 N/mm²) und hohem Fliessgrenzenverhältnis (Fliessgrenze/Zugfestigkeit > 0,90) verwendet.

Maschennetze aus Drahtseilen, wie sie z.B. aus der Patentschrift EP-B1-474 910 bekannt sind, sind aufwändig in der Herstellung und teuer. Zudem leisten die Seile nur wenig Verformungsarbeit, da sie vorwiegend nur im elastischen Bereich mit wenig Verformungsweg beansprucht werden können; dies deshalb, weil insbesondere die Endverbindungen maximal Kräfte übertragen, die 10 bis 20% unter der wirklichen Bruchkraft und damit unter der Fliesskraft der Seile liegen.

Die Verbindungsmittel in den Kreuzungspunkten der Seile können weitere namhafte Beiträge zur Energieabsorption nur leisten, wenn sie z.B. als Klemmen ausgebildet sind, die ein definiertes Aneinanderklemmen der sich kreuzenden Seile gestatten. Die Verwendung solcher Klemmen führt aber zu einer weiteren Verteuerung der Netze.

Ringnetze aus Spannstahldrähten (siehe z.B. die Patentschrift EP-B1-679 457) werden aus vier- oder sechsfach ineinander geschlauften Ringen gebildet. Die Ringe in Ringnetzen von z.B. vierfach ineinander geschlauften Ringen werden bei Belastung zu im Wesentlichen Zwei-, Drei- oder Vierecken verformt, wobei sie entsprechende Verformungsarbeit leisten. An den Berührungspunkten der ineinander geschlauften Ringe treten grosse Umlenkungen mit kleinen Biegeradien auf. Zudem üben die im Drahtbündel oben liegenden Drähte zusätzliche Querkräfte auf die unten liegenden Drähte aus. Die Ringe versagen an diesen Stellen unterhalb der Fliesskraft infolge einer kombinierten Beanspruchung aus Zug- und Biegespannungen sowie grossen Querdrücken, sodass ein energieabsorbierendes Fliessen des Ringwerkstoffes ausserhalb der Biegestellen nicht stattfinden kann.

Da die Maschenweiten bzw. Ringdurchmesser ca. 20 bis 35 cm betragen, müssen im Steinschlagschutz gegen den Durchschlag von kleineren Steinen weitere Vorkehrungen getroffen werden.

In der internationalen Patentanmeldung WO 99/43894 wird als Steinschlagschutz oder für die Sicherung einer Erdoberflächenschicht ein Drahtgeflecht beschrieben, das aus hochfesten Stahldrähten mit einer Nennfestigkeit im Bereich von 1000 bis 2200 N/mm² besteht. Solche Drahtgeflechte haben aber den Nachteil, dass sie relativ teuer in der Herstellung sind und für dynamische Zwecke lediglich in Schutzanlagen geeignet sind, die gegen einfallende Massen mit relativ kleinen Energien ausgelegt sind.

Ausgehend von diesem Stand der Technik liegt die Aufgabe der vorliegenden Erfindung darin, ein gattungsgemässes Netzelement anzugeben, das kostengünstig und einfach herstellbar ist, aber dennoch insbesondere in Anlagen eingesetzt werden kann, die als Schutz gegen einfallende Massen mit hohen kinetischen Energien ausgelegt sind.

Ein solches Netzelement ist im unabhängigen Anspruch 1 angegeben. Die weiteren Ansprüche geben bevorzugte Ausführungen sowie Verfahren und Verwendungen an.

Das erfindungsgemässe Netzelement hat den Vorteil, dass es einfach und kostengünstig herstellbar ist, wobei seine Bruchkraft auch einen Einsatz in Schutzanlagen erlaubt, die gegen einfallende Massen mit kinetischen Energien von mehr als 250 kJ ausgelegt sind. Weitere Vorteile gehen aus der nachfolgenden Beschreibung hervor.

Ein bevorzugtes Ausführungsbeispiel der Erfindung ist nachfolgend anhand der Zeichnungen näher erläutert. Es zeigen:
- Fig. 1: ein mehrlagiges Netzelement in perspektivischer Draufsicht;
- Fig. 2: einen Ausschnitt aus einer Steinschlagverbauung, welche mit Drahtseilen miteinander verbundene und an Tragseilen aufgespannte Netzelemente gemäss Fig. 1 aufweist.

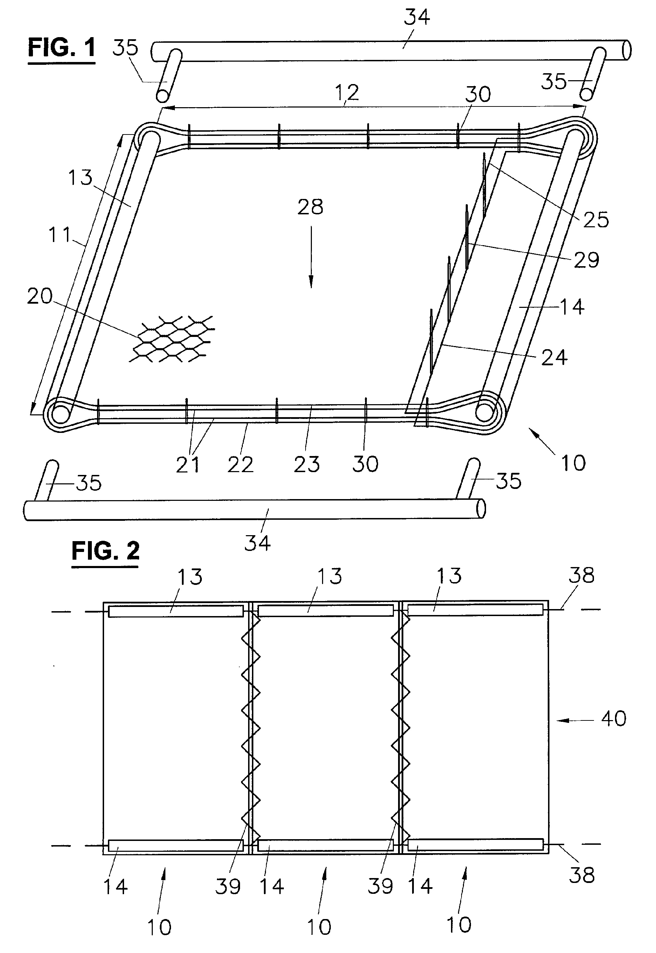

Fig. 1 zeigt ein Netzelement 10 von einer bestimmten Breite 11 und einer bestimmten Höhe 12. Das Netzelement 10 umfasst Trägerelemente in Form von zwei gegenüberliegenden Trägerrohren 13 und 14, wobei der Abstand dazwischen im Wesentlichen die Höhe 12 des Netzelementes 10 bestimmt.

Die Trägerrohre 13 und 14 können aus Kunststoff, wie beispielsweise Polyethylen, oder Metall, wie beispielsweise Stahl, bestehen. Der Innendurchmesser der Trägerrohre 13 und 14 entspricht mindestens dem 1.5-fachen Durchmessers eines Tragseiles, welches zur Montage des Netzelements 10 durch die Trägerrohre gezogen wird. Entsprechend ist der Aussendurchmesser der Trägerrohre 13 und 14 gewählt (z.B. ca. 40 mm für ein Tragseil mit einem Durchmesser von 18 mm).

Um die beiden Trägerrohre 13 und 14 ist ein Netz, beispielsweise in Form eines Drahtgeflechtes 20, gewickelt, sodass mindestens zwei Lagen 21 bis 23 gebildet sind. In Fig. 1 ist der besseren Übersicht wegen die Struktur des Drahtgeflechtes 20 lediglich in einem kleinen Ausschnitt dargestellt.

Das Netzelement 10 in Fig. 1 weist beispielsweise vier Lagen 21, 22 und 23 auf, wobei die letzte äusserste Lage 23 zur Verankerung dient. Dazu ist diese Verankerungslage 23 soweit verlängert, dass sie zuerst um das erste Trägerrohr 13 gewickelt und dann um etwa drei bis sechs Maschenweiten (z.B. um etwa 25 cm) um das zweite Trägerrohr 14 umgeschlagen ist. Dadurch kommt bei der Montage des Netzelementes 10 das Drahtgeflechtende 24 auf der Talseite des Netzelementes 10 zu liegen, d.h. auf der Seite des Netzelementes 10, welche sich gegenüberliegend der Seite befindet, auf welche die einfallende Masse 28 einwirkt. Das Drahtgeflechtende 24 ist mittels Bindedrähten 29, die durch alle Lagen 21 bis 23 hindurchgesteckt sind, fixiert.

Durch diese Anordnung wird die Verankerungslage 23 bei Belastung des Netzelementes 10 durch eine einfallende Masse 28 zwischen den Trägerrohren 13, 14 und den darunterliegenden Lagen 21, 22 eingeklemmt und trägt so zur Verankerung insbesondere der zweitletzten äussersten Lage 22 bei, welche beim montierten Netzelement 10 der einfallenden Masse 28 abgewendet ist.

Zur Verankerung des Drahtgeflechtanfanges 25 ist die innerste Lage 21 um eines der beiden Trägerrohre 14 um etwa drei bis sechs Maschenweiten (z.B. um etwa 25 cm) umgeschlagen und mittels Bindedrähten 29, die durch die Lagen 21 bis 23 hindurchgesteckt sind, fixiert. Je nach Anzahl der Lagen 21 bis 23 sind das Drahtgeflechtende 24 und der Drahtgeflechtanfang 25 um dasselbe Trägerrohr 14 (wie in Fig. 1 dargestellt) oder je um eines der beiden Trägerrohre 13 und 14 gewickelt. Ersterer Fall hat den Vorteil, dass das Drahtgeflechtende 24 und der Drahtgeflechtanfang 25 mittels der Bindedrähte 29 direkt miteinander verbunden sind.

Das Drahtgeflecht 20 ist vorzugsweise einstückig ausgebildet, so dass die Lagen 21 bis 23 jeweils ohne Unterbrechung des Drahtgeflechtes 20 in die nächstfolgende Lage übergeht. Es ist jedoch möglich, wenn beispielsweise ein Netzelement mit einer hohen Anzahl von Lagen geschaffen werden soll, zwei oder mehr einstückige Drahtgeflechte 20 um die beiden Trägerrohre zu wickeln.

Zum Zusammenhalt der einzelnen Lagen 21 bis 23 sind die jeweiligen Drahtgeflechtränder durch Bindedrähte 30 miteinander verbunden.

Zur Herstellung des Netzelementes 10 sind beispielsweise handelsübliche Drahtgeflechte geeignet. Sie sind typischerweise aus Stahl- oder Eisendrähten geflochten, die zum Schutz vor Korrosion verzinkt oder mit Kunststoff überzogen sind. Drahtgeflechte mit verschiedenen Maschenformen und -weiten sowie verschiedenen Drahtdurchmessern sind erhältlich und werden beispielsweise auf 25 bis 100 m Rollen in Breiten von 2 bis 4 m verkauft. Die Drahtgeflechte sind beispielsweise als viereckige Diagonalgeflechte mit quadratischen (cf. DIN 1199) oder rhombusförmigen Maschen oder als sechseckiges Geflecht mit zweifach gewundenen Maschen (cf. DIN 1200) ausgebildet. Die Maschenweite ist typischerweise im Bereich von 40 mm bis 150 mm. Die Drähte haben typischerweise einen Durchmesser von 2 mm bis 5 mm. Die Festigkeit eines einzelnen Drahtes beträgt typischerweise weniger als 1000 N/mm².

Eine Art eines handelsüblichen Drahtgeflechtes ist z.B. das sogenannte Steinschlagschutznetz. Es ist als sechseckiges Geflecht mit zweifach gewundenen Maschen von 80 mm x 100 mm ausgebildet. Die stark verzinkten Eisendrähte weisen einen Durchmesser von 3 mm auf und haben eine Festigkeit, die etwa im Bereich von 550 bis 650 N/mm² liegt. Da das Drahtgeflecht relativ feinmaschig ist und mehrere Lagen verwendet werden, bietet das Netzelement 10 auch Schutz vor dem Durchfallen von kleineren Steinen, ohne dass weitere Massnahmen nötig wären.

Damit insbesondere hohe kinetische Energien (typischerweise mehr als 500 kJ) von einfallenden Massen wirksam durch das Netzelement 10 absorbiert werden können, sind grosse Verformungen erforderlich. Grosse Verformungen sind bei Drahtgeflechten 20 möglich, die Drähte mit einer hohen Duktilität aufweisen. Das Fliessgrenzenverhältnis solcher Drähte ist relativ niedrig (Fliessgrenze/Zugfestigkeit < 0,85). Zur Herstellung von solchen Drähten können Werkstoffe verwendet werden, die eine Festigkeit aufweisen, die kleiner als 1000 N/mm², bevorzugt kleiner als 700 N/mm² ist.

Die Anzahl der Drahtgeflechtlagen 21 bis 23 wird aufgrund der gewünschten Bruchkraft des Netzelementes 10 festgelegt, sodass sich durch eine Erhöhung der Anzahl Lagen 21 bis 23 auch die Bruchkraft des Netzelementes 10 erhöht. Mit dem oben erwähnten Steinschlagschutznetz werden z.B. je nach Schutzsystem 3-5 Lagen benötigt, um Massen mit einer kinetischen Energie von 250-1000 kJ aufzufangen.

Es ist auch möglich, Drahtgeflechte zu verwenden, deren Drähte eine hohe Festigkeit aufweisen (1000 bis 2200 N/mm²). Diese werden beispielsweise aus hochfestem Stahl hergestellt. Drahtgeflechte aus solchen Drähten haben den Vorteil, dass eine geringere Anzahl Lagen ausreicht, um eine bestimmte Bruchkraft des Netzelementes zu erzielen. Es ist aber auch ein grösserer Kraftaufwand nötig, um die Drähte zu biegen, was z.B. den Einsatz einer Netzbiegemaschine bedingt. Zudem ist das Verformungsvermögen solcher Drähte wegen ihrem hohen Fliessgrenzenverhältnis (> 0.90) insbesondere an den Biegestellen eingeschränkt.

Allgemein können die verschiedensten Arten von Netzen, wie beispielsweise Ringnetze, Maschennetze aus Drahtseilen, Drahtringnetze, Netze aus Stäben etc., verwendet werden, um die einzelnen Lagen 21 bis 23 zu bilden, und so ein mehrlagiges Netzelement mit einer erhöhten Bruchkraft zu schaffen.

Die eingangs erwähnten Ringnetze aus Drahtringen bestehen typischerweise aus einem Drahtbündel aus wenigen Windungen (z.B. sieben). Zur Erhöhung der Bruchkraft der Netze wird beispielsweise die Anzahl der Windungen erhöht. Dabei wird aber der Unterschied der Drahtlänge zwischen der kürzesten und der längsten Windung grösser. Es wurde gefunden, dass dies zusätzlich zu den eingangs erwähnten Nachteilen zur Folge hat, dass bei einer Beanspruchung die kürzeren Windungen gestreckt und an den gegenseitigen Umlenkstellen mit den Nachbarringen zu Bruch kommen, bevor die längeren Windungen Kräfte aufnehmen können. Die Verstärkung der Ringnetze durch Erhöhung der Anzahl der Windungen ist somit auf ein gewisses Mass beschränkt. Eine effektive Verstärkung kann hingegen durch den Einsatz eines mehrlagigen Ringnetzes erreicht werden. Ein solches Ringnetz wird dadurch hergestellt, indem einzelne Lagen eines Ringnetzes übereinandergelegt und an den Rändern miteinander mit Verbindungselementen und mit den Tragseilen verbunden werden. Nebst einer Erhöhung der Bruchkraft entstehen dadurch in Bezug auf den Transport und die Montage erhebliche Vorteile gegenüber schweren einlagigen Ringnetzen.

Es wurde weiter überraschenderweise gefunden, dass die Netzelemente 10, welche mehrere Lagen eines Drahtgeflechtes 20, insbesondere eines handelsüblichen, umfassen, den Anforderungen in Bezug auf die Festigkeit genügen, die beispielsweise an Steinschlagverbauungen gestellt werden. Bei einem gegebenen Drahtgeflecht kann die zu erzielende Bruchkraft des Netzelementes durch die Anzahl der aufeinanderliegenden Drahtgeflechtlagen festgelegt werden. Dies erlaubt es, die verschiedensten Arten von Drahtgeflechten zu verwenden. Insbesondere ist es möglich, in Massenproduktion hergestellte Drahtgeflechte zu verwenden, um kostengünstig Netzelemente mit einer hohen Bruchkraft herzustellen.

Das Netzelement 10 kann auf einfache Weise hergestellt werden:
Mittels Abstandshalter 34, welche die Netzelementhöhe 12 definieren, werden die Trägerrohre 13 und 14 in einem bestimmten Abstand fixiert. Als Abstandshalter eignen sich z.B. zwei Stangen 34, die an ihren Enden mit Zapfen 35 versehen sind, welche in ein entsprechendes Trägerrohrende hineingeführt werden können. Das Drahtgeflecht 20 wird solange um die Trägerrohre 13 und 14 gewickelt, bis die gewünschte Anzahl Lagen 21 bis 23 erreicht ist. Diese werden dann mittels Bindedrähten 29 und 30 fixiert. Durch Variieren der Länge der Abstandshalter 34 und somit des Abstandes zwischen den Trägerrohren, ist eine entsprechende Netzelementhöhe 12 wählbar.

Die Herstellung erfordert nur wenige Einrichtungen und Werkzeuge, sodass die Fertigung nebst in einem Werk auch direkt auf der Baustelle vorgenommen werden kann. Insbesondere in unwegsamem Gelände ist es möglich, die Ausgangsmaterialien in die Nähe des Verwendungsortes des Netzelementes 10 zu transportieren und dort das Netzelement 10 wie oben beschrieben anzufertigen.

Die Netzelemente 10 lassen sich für die verschiedensten Zwecke einsetzen: als Steinschlagverbauung, Lawinenverbauung, Barriere gegen Murgänge (Schlammlawinen in Bachbetten), als Schutznetz bei Sprengungen, etc. Im nichtdynamischen Bereich sind sie einsetzbar als Boden- oder Felsabdeckung gegen Erosion, Materialrutsche, Materialausbrüche und dgl. oder als Böschungsabdeckung zur Sicherung von Böschungen.

Figur 2 zeigt schematisch einen Ausschnitt aus einer Steinschlagverbauung mit einer Anzahl der Netzelemente 10. Diese sind durch ein oberes und unteres Tragseil 38 befestigt, welches durch die jeweiligen Trägerrohre 13 und 14 gezogen worden ist. Die Netzelemente 10 sind seitlich mit einer Zickzackstichverbindung mittels Drahtseil 39 verbunden und bilden so ein Gesamt-Netz 40 von einer bestimmten Länge. Durch Überlappen von einzelnen Netzelementen 10 lässt sich die Länge des Gesamt-Netzes 40 auch feinregulieren.

Durch die Aufteilung des Gesamt-Netzes 40 in einzelne Netzelemente 10 wird die Handhabung wesentlich vereinfacht. Die Montage des Gesamt-Netzes 40 benötigt keine aufwändigen Hebezeuge, sondern kann sozusagen von Hand vorgenommen werden. Dazu werden Tragseile 38 durch die Trägerrohre 13 und 14 gezogen und gespannt, wodurch die Netzelemente 10 aufgespannt werden.

Lokal beschädigte Bereiche des Gesamt-Netzes 40 lassen sich durch Einnähen von neuen Netzelementen 10 mit einer Zickzackstichverbindung mittels Drahtseil 39 auf einfache Weise reparieren.

Ausgehend von der vorangehenden Beschreibung eines bevorzugten Ausführungsbeispiels sind dem Fachmann abgewandelte Ausführungen zugänglich, ohne den Bereich der Erfindung wie in den Ansprüchen definiert zu verlassen.

### Bezugszeichenliste

- 10: Netzelement
- 11: Breite des Netzelementes 10
- 12: Höhe des Netzelementes 10
- 13: 1. Trägerrohr
- 14: 2. Trägerrohr
- 20: Drahtgeflecht
- 21: Lagen des Drahtgeflechtes 20
- 22: zweitletzte äusserste Lage
- 23: letzte äusserste Lage (Verankerungslage)
- 24: Ende des Drahtgeflechtes 20
- 25: Anfang des Drahtgeflechtes 20
- 28: Richtung der einfallenden Masse
- 29: Bindedraht
- 30: Bindedraht an den Rändern des Drahtgeflechtes 20
- 34: Abstandshalter
- 35: Zapfen
- 38: Tragseil
- 39: Drahtseil
- 40: Gesamt-Netz

## Patentansprüche

1. Netzelement (10) zum Abbremsen bewegter Massen oder zur Sicherung gegen Materialverschiebungen, welches ein Netz (20) umfasst, **dadurch gekennzeichnet, dass** das Netz mindestens zwei Lagen (21, 22, 23) aufweist zur Erhöhung der Bruchkraft des Netzelementes.

2. Netzelement nach Anspruch 1, **dadurch gekennzeichnet, dass** das Netz ein Drahtgeflecht (20) oder ein Ringnetz ist.

3. Netzelement nach einem der Ansprüche 1 bis 2, **dadurch gekennzeichnet, dass** mindestens zwei Lagen (21, 22, 23), bevorzugt alle Lagen aus einem einstückigen Netz (20) gebildet sind.

4. Netzelement nach einem der Ansprüche 1 bis 3, **dadurch gekennzeichnet, dass** das Netz (20) im Wesentlichen gebildet ist aus Stahldraht und/oder Eisendraht, wobei der Stahl- bzw. Eisendraht vorzugsweise verzinkt oder beschichtet ist.

5. Netzelement nach einem der Ansprüche 1 bis 4, **dadurch gekennzeichnet, dass** das Netz (20) im Wesentlichen aus einem Draht gebildet ist, der eine Festigkeit von weniger als 1000 N/mm², bevorzugt weniger als 700 N/mm² hat.

6. Netzelement nach einem der Ansprüche 1 bis 5, **dadurch gekennzeichnet, dass** das Netz ein Drahtgeflecht (20) mit vier- oder sechseckigen Maschen umfasst.

7. Netzelement nach einem der Ansprüche 1 bis 6, **dadurch gekennzeichnet, dass** es Trägerelemente (13, 14) umfasst, um welche das Netz (20) zur Bildung der Lagen (21, 22, 23) gewickelt ist.

8. Netzelement nach Anspruch 7, **dadurch gekennzeichnet, dass** die Trägerelemente im Wesentlichen Rohrstücke (13, 14) sind, um zur Montage des Netzelementes (10) ein Tragseil (38) hindurchführen zu können.

9. Netzelement nach einem der Ansprüche 1 bis 8, **dadurch gekennzeichnet, dass** die Lagen (21, 22, 23) zu deren Fixierung durch Drähte (29, 30) verbunden sind.

10. Netzelement nach Anspruch 9, **dadurch gekennzeichnet, dass** die Drähte (29, 30) sich im Wesentlichen im Randbereich des Netzes (20) befinden.

11. Netzelement nach einem der Ansprüche 1 bis 10, **dadurch gekennzeichnet, dass**
die letzte äusserste Lage (23) des Netzes (20) zur Verankerung auf mindestens einer anderen Lage (21, 22) liegt und
auf der Seite des Netzelementes endet, die gegenüber der Seite des Netzelementes liegt, welche für das Einwirken der bewegten Masse (28) vorgesehen ist.

12. Anordnung aus mindestens zwei Netzelementen (10) gemäss einem der Ansprüche 1 bis 11, **dadurch gekennzeichnet, dass** sie zur Vergrösserung der Gesamtfläche überlappend oder am Rand mit einem Drahtseil (39) verbunden sind.

13. Verfahren zur Herstellung eines Netzelementes (10) nach einem der Ansprüche 1 bis 11, **dadurch gekennzeichnet, dass** ein Netz (20) um Trägerelemente (13, 14) gewickelt wird, so dass mindestens zwei Lagen (21, 22, 23) gebildet werden, wobei die Anzahl der Lagen in Abhängigkeit der gewünschten Bruchkraft des Netzelementes ausgewählt wird.

14. Verfahren gemäss Anspruch 13, **dadurch gekennzeichnet, dass** beim Aufwickeln des Netzes (20) die Trägerelemente (13, 14) mittels Abstandshaltern (34) in einem bestimmten Abstand (12) voneinander gehalten werden.

15. Verwendung eines Netzelementes gemäss einem der Ansprüche 1 bis 11, einer Anordnung davon gemäss Anspruch 12 oder eines nach einem der Ansprüche 13 bis 14 hergestellten Netzelementes zu mindestens einem der folgenden Zwecke:
als Steinschlagverbauung, Lawinenverbauung, Barriere gegen Murgänge, als Schutznetz bei Sprengungen, als Boden-, Felsund/oder Böschungsabdeckung zur Sicherung insbesondere gegen Erosion, Materialrutsche und Materialausbrüche.
